# EUROPEAN PATENT SPECIFICATION

(11) **EP 2 464 543 B1**
(45) Date of publication and mention of the grant of the patent: **14.08.2013**
(21) Application number: 10752095.9
(22) Date of filing: 28.07.2010
(51) Int. Cl.: B60R 5/04, B60P 7/08

(54) **VEHICLE RETENTION SYSTEM**
FAHRZEUGRÜCKHALTESYSTEM
SYSTÈME DE RÉTENTION DE VÉHICULE

(30) Priority: 15.08.2009 GB 0914323
(43) Date of publication of application: 20.06.2012
(73) Proprietor: Bentley Motors Limited, Crewe, Cheshire CW1 3PL (GB)
(72) Inventor: HEALTH, Richard, Anthony, Cheshire (GB)
(74) Representative: Wilson Gunn
(86) International application number: PCT/GB2010/001431
(87) International publication number: WO 2011/020986

(56) References cited:
- EP-A1- 1 897 757
- EP-A2- 1 829 747
- FR-A3- 2 839 124
- US-A- 6 025 019
- US-A1- 2006 222 455
- US-B1- 6 585 465

## Description

### Technical Field of the Invention

The present application relates to a vehicle luggage retention system.

### Background to the Invention

It is known to provide retention systems in the luggage compartment of a vehicle which can be used to retain items placed in the compartment. Typically, such retention systems are in the form of hinged loops to which retention members, such as luggage straps or nets, can be hooked. The known hinged loops tend to project from the surfaces to which they are attached and so are prone to damage or may cause damage to items placed in the compartment. They may also encroach into valuable storage space. Another problem with the known retention arrangements is that the hinged loops are fixed in position and so that items can only be retained within the luggage compartment in certain positions or by using large retention straps or nets.

It is also known to provide retention members that are slidably mounted in runners in the vehicle luggage compartment. US 5, 176, 479, for example, discloses a beam member which is slidably mounted to a pair of spaced track members fixed in the luggage compartment of a vehicle. The arrangement includes a screw threaded fastener and tap plate associated with each track member to lock the beam in position. This arrangement has the advantage that the position of the beam can be adjusted depending on the size of the luggage but the arrangement is very complicated and expensive to manufacture and yet still provides only limited flexibility.

FR2839124 discloses an arrangement for retaining a bolt having a T-shaped head within a metallic profile defining a C-shaped channel. The head can be inserted into the channel through a longitudinal slot in a front surface of the profile in one orientation and twisted through ninety degrees so that wing portions of the head locate underneath the front surface either side of the longitudinal slot. A resilient element on the head engages with a base surface of the channel member to bias the head into contact with front surface to hold the bolt in position.

There is a need, therefore, for an improved vehicle luggage retention system which overcomes, or at least mitigates, some or all of the disadvantages of the known retention devices.

### Summary of the Invention

In accordance with a first aspect of the invention, there is provided a vehicle luggage retention system comprising at least one elongate channel member and one or more clips for insertion into the channel member, the channel member defining an internal channel and having a longitudinal slot providing access to the channel, each clip having an engagement portion adapted to locate in the channel and an external attachment portion connected to the engagement portion by means of a neck which passes through the longitudinal slot, the engagement portion being shaped such that in one angular orientation it is able to pass through the longitudinal slot, so as to enable it to be inserted into or removed from the channel member, and such that once inserted it can be moved to another angular orientation in which it is unable to pass through the longitudinal slot to prevent its removal from the channel member, characterised in that at least part of the clip which contacts the channel member once inserted comprises a friction material adapted so that contact between the material and the channel member resists longitudinal movement of the clip along the channel member; at least part of each clip is made of a load bearing material, such as a metallic or polymeric material, onto which the friction material is over-moulded or coated or wherein each clip has a load bearing core and the friction material is in the form of separate pads or sleeves that are attached to the load bearing core.

In a vehicle luggage retention system in accordance with the invention, a clip can be inserted in a channel member at any desired location along its length and used to secure a retention member, such as a strap, net or the like, or any other item to the channel member. The application of a force to the clip will tend to rock the clip relative to the channel member bringing regions of the friction material into contact with the channel member so that the clip does not slide along the channel member. This provides a very simple and effective method of locking the clip in position.

The retention system may comprise a plurality of clips, each clip being insertable in the, or any one of the, channel member(s).

The retention system will often comprise two or more channel members which will be spaced apart. In this type of arrangement, clips inserted into two of the channel members can be used to secure a retention member or other item between them. The channel members may be aligned parallel to one another but this is not essential.

The attachment portion of each clip may be adapted to enable a retention member or other item to be attached to it. The attachment portion could comprise a buckle loop to which a retention member can be affixed. A range of clips having different types of attachment portion can be provided. The clips may be separate items or they may be provided integral with or pre-attached to a retention member or other item to be secured.

The clip engagement portion may have a dimension in a first direction which is smaller than the width of the longitudinal slot in the channel member and a dimension in a second direction which is larger than the width of the longitudinal slot. The neck and the engagement portion may be generally "T" shaped.

The at least one elongate channel member may be extruded from a polymeric, metallic, or other suitable material. The at least one channel member may comprise a generally planar base region and two curved side wall regions extending from the base towards each other to define the internal channel, the sidewalls having free ends that are spaced apart to define the longitudinal slot. The at least one channel member may be adapted to fixed to a support surface which may be substantially rigid. Alternatively, the channel member may be affixed to or moulded integrally with a flexible mat. Channel members can also be provided as integral parts of a support surface such as a display unit, framework or shelving arrangement.

Part of the attachment portion of the at least one clip may overlie in spaced relation a part of the engagement portion and at least opposing surfaces of the overlying parts of the attachment and engagement portions may comprise the friction material. The arrangement may be configured such that when the at least one clip is engaged in the channel it can be rocked by the application of a lateral load to the attachment portion to bring part of the engagement portion which comprises the friction material into contact with an inner surface of the channel member and a part of the attachment portion which comprises the friction material into contact with an outer surface of the channel. In one embodiment, the engagement portion has locking regions which extend either side of the neck in a common plane, the attachment portion having corresponding locking regions extending in the same plane and which overly in spaced relation the locking regions of the engagement portion, at least opposed surfaces of the engagement portion locking regions and the attachment portion locking regions comprising the friction material.

### Detailed Description of the Invention

An embodiment of the invention will now be described, by way of example only, with reference to the accompanying drawings, in which:
Figure 1 is a perspective view of a retention system in accordance with a first embodiment of the invention, showing a clip prior to insertion into the channel member;
Figure 2 is a view similar to that of Figure 1 but showing the clip after insertion;
Figure 3 is a perspective view of a clip forming part of the system of Figures 1 and 2;
Figure 4 is a front view of the clip of Figure 3;
Figure 5 is a side view of the clip of Figures 3 and 4;
Figure 6 is a perspective view of a channel member forming part of the system of Figures 1 and 2;
Figure 7 is a schematic plan view of part of the luggage compartment of a vehicle showing a retention system in accordance with the invention in use retaining an item of luggage in position;
Figure 8 is a front view of an alternative embodiment of a clip for use in the retention system of Figures 1 and 2; and
Figure 9 is a side view of the clip of Figure 8.

A retention system 10 in accordance with the invention comprises at least one elongate channel member 12 and at least one clip 14 which can be inserted into the channel member at a desired position along its length. In practice, it is envisaged that usually at least two channel members 12 will be used spaced apart and clips used to attach a retention member or other item between the two channel members. However, in some applications, a single channel member may be used.

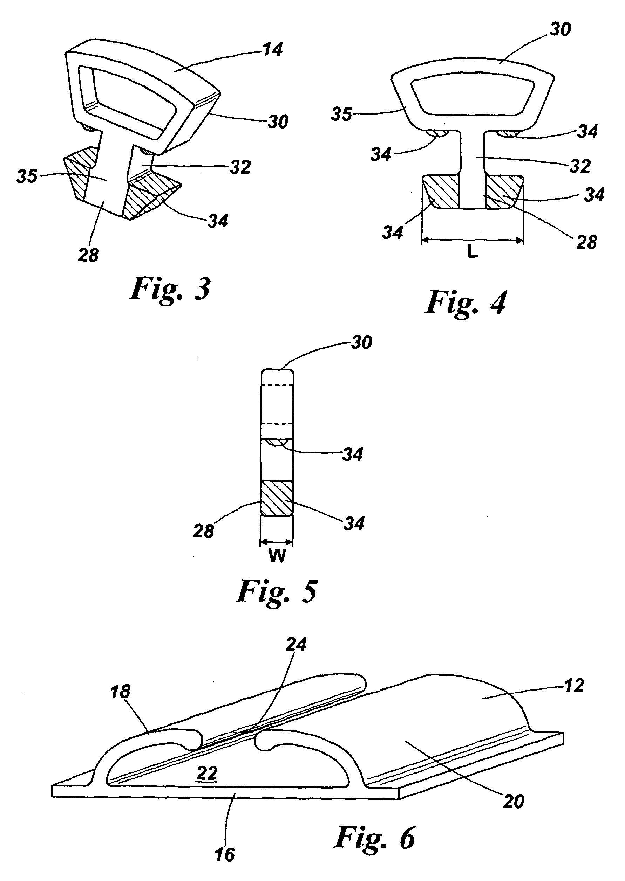

The channel member 12 can be made from any suitable material but conveniently is extruded from a suitable polymeric or metallic material. The channel member 12 has a planer base 16 and two curved side walls 18, 20 which extend away from the base towards each other to define an internal channel 22. The free ends of the side walls 18, 20 are spaced apart to define a longitudinal slot 24 providing access to the channel 22. Each channel member may be a separate component, as illustrated in Figure 6, which can be secured to a suitable support surface. Channel members can also be incorporated integrally into a support surface. In a further alternative arrangement, one or more channel members 12 can be formed integrally as part of a mat 26 or other surface covering for use as a floor covering in a storage space, such as the luggage compartment of a vehicle. Channel members 12 can be of any suitable length. The base 16 may extend laterally beyond the side walls 18, 20 for ease of mounting the channel member.

Whilst a channel member 12 having curved side walls 18, 20 and a planar base 16 has been found to be particularly effective, it will be appreciated that the channel member could be formed with a different profile..

Clips 14 for use with the channel member 12 have an engagement portion 28 for insertion into the channel 22 and an external attachment portion 30 which remains outside of the channel member. The engagement portion 28 and the attachment portion 30 are joined by a neck 32 which passes through the longitudinal slot.

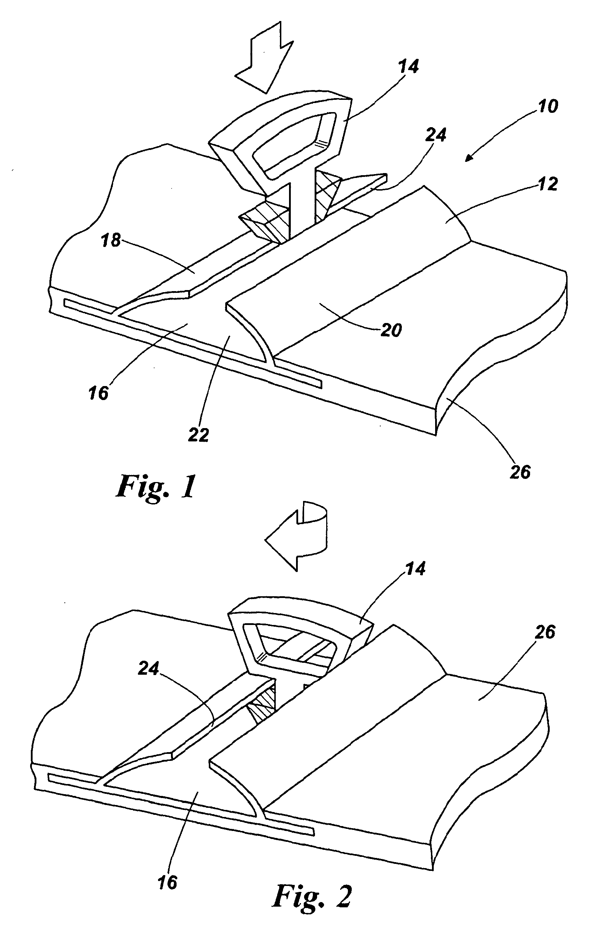

The engagement portion 28 has a width W, as shown in Figure 5, which is less than the width of the longitudinal slot 24 and a length L, as shown in Figure 4, which is greater than the width of the slot 24. This enables the engagement portion 28 to be inserted into and out of the channel through the slot 24 when it is aligned longitudinally with the slot as shown in Figure 1. Once the engagement portion has been introduced into the channel 22 through the slot 24, the clip 14 can be twisted through 90 degrees, as shown in Figure 2, so that the engagement portion is aligned transversely to the slot 24. In this orientation, the engagement portion 28 is unable to pass through the slot 24 and the clip is locked to the channel member 12. In the present embodiment, the engagement portion 28 and the neck 32 form a generally "T" shape, the engagement portion having locking regions which project in the same plane on either side of the neck to form the bars of the "T" but it will be appreciated that other shapes can be produced to function in the same way to enable the clip to be twist locked into the channel.

A clip 14 can be inserted into a channel member 12 at any desired position along its length. Parts of the engagement portion 28 and the attachment portion 30 which come into contact with the channel 12 are over-moulded or coated with or are provided with pods or sleeves of friction material 34 which resists sliding movement of the clip 14 relative to the channel member 12. Thus once a clip has been inserted into the channel member 12 it will tend to remain in a given longitudinal position.

The attachment portion 30 is adapted to enable a retention member or other item to be attached to it. In the embodiment illustrated, the attachment portion is in the form of a buckle loop 31 to which items can be clipped. However, the design of the attachment portion 30 can be varied as required by the application and the system may include a range of clips having differently configured attachment portions.

Parts of the attachment portion 30 of the clip 14 overlie the locking regions of the engagement portion 28 in spaced relation. When the clip is locked in the channel, the side walls 18, 20 of the channel member 12 locate between the opposed surfaces of the locking regions of the engagement portion and the overlying parts of the attachment portion. When a lateral force is applied to the clip 14, the clip will tend to rock bringing part of the engagement portion 28 into contact with an inner surface of at least one of the walls 18, 20 and a part of the attachment portion 30 into contact with the outer surface of at least one of the walls. This locks the clip 14 in position and resists movement of the clip along the channel member. The presence of the friction material 34 assists in providing this locking action and also prevents the clip 14 from marking the channel member. The friction material 34 is present at least on the opposing surfaces of the overlying parts of the engagement and attachment portions 28, 30.

The clip 14 may have a substantially rigid load bearing core 35 which forms the attachment portion 30 and the neck 32 and at least part of the engagement portion 28 and to which the friction material 34 is applied or attached. The core 35 could be manufactured from a substantially rigid polymeric material or from a metallic material onto which the friction material 34 is applied, either as a coating or an over moulding. Alternatively, separate friction pads or sleeves may be attached to the rigid core. Rather than discreet regions of friction material 34 as shown in the drawings, friction material may be provided on all the surfaces of the clip that come into contact with the channel member when the clip is inserted. Any suitable friction material can be used but materials that are resiliently deformable are particularly suitable as they provide a degree of cushioning, preventing the channel member 12 from being marked or damaged. Suitable friction materials include but are not limited to: natural or synthetic rubber or other polymeric materials.

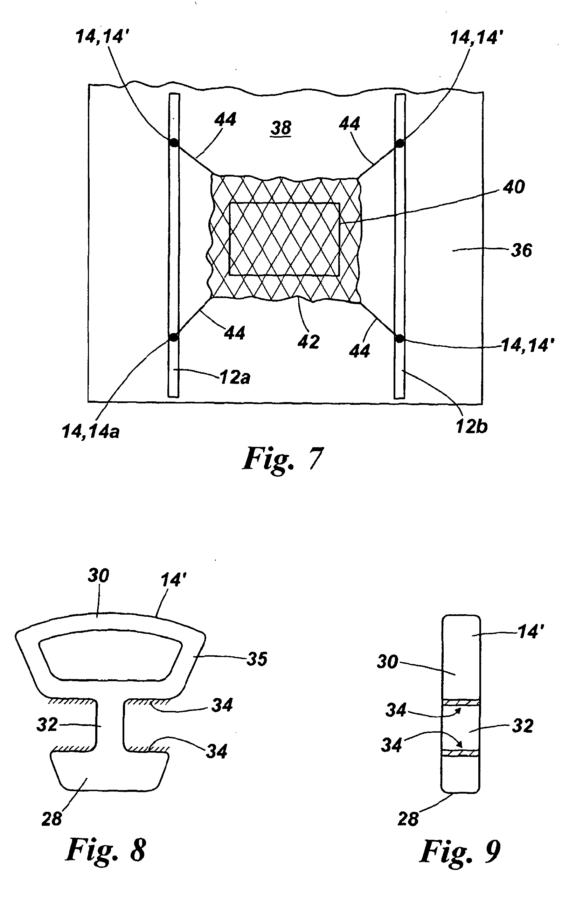

Figures 8 and 9 illustrate an alternative embodiment of a clip 14' for use in the retention system 10. The clip 14' is similar to the clip 14 described above and has a core 35 made of any suitable load bearing material such as a metallic, polymeric, or composite material. The core 35 defines the engagement portion 28, the attachment portion 30 and the neck 32. A friction material 34 covers the lower surface of the attachment portion 30 and the upper surface of the engagement portion 28 on either side of the neck 32. The friction material 34 is arranged for contact with the side walls 18, 20 of the channel member when a load is applied to the clip.

The retention system 10 provides a flexible and simple to use arrangement for attaching items to a surface. The clips 14, 14' can be inserted anywhere along the length of a channel member 12 and are automatically held in position by a combination the rocking movement of the clip under load and the friction material. No complex clamping arrangement being required to fix each clip in its desired position. Channel members 12 can be provided on any suitable surface whether horizontal, vertical or any angle in-between.

As shown, the clips 14, 14' can be provided as separate items to which retentions members, such as luggage straps, bungee straps and luggage nets, or other items can be attached. Alternatively, clips can be formed integrally with or pre-attached to a retention member or other item. For example, luggage retention straps can have suitable clips at either end or a luggage net can be provided with attachment portions, each having a suitable clip. Clips 14, 14' can also be provided pre-affixed to various luggage items, such as suitcases, bags, golf bags and the like, or any other item which may be secured using the retention system.

Figure 7 illustrates schematically a typical arrangement for use in a vehicle luggage compartment 36. Two channel members 12a, 12b are mounted to the floor 38 of the compartment. The channel members 12a, 12b extend parallel to one another in a longitudinal direction of the compartment and are spaced apart. An item of luggage 40 positioned on the floor of the compartment between the channel members is held in place by means of a luggage net 42. A strap 44 at each corner of the net 42 is attached to a clip 14, 14' which is inserted in a corresponding one of the channel members 12a, 12b.

Whilst two channel members 12a, 12b are shown in Figure 7, it will be appreciated that more than two channel members could be provided in the luggage compartment to allow for greater flexibility. In addition, channel members 12 could also be attached to side, front and/or rear surfaces of the luggage compartment. Channel members could be arranged to extend laterally across the vehicle compartment or in any suitable orientation.

When the retention system is not in use, the clips 14, 14' can be removed from the channel members 12 so that they are not at risk of being damaged and so that they do not damage other items placed in the compartment. This ensures that the whole of the floor space of the luggage compartment is available for use. With the clips removed, the channel members 12a, 12b act as runners on which luggage items can be slid into the luggage compartment. The spaced channel members 12 can also be used to mount a rolling load assist tray in the luggage compartment using clip like members for insertion in the channel members. Such an arrangement may comprise a base or runners mounted to the channel members 12 using clips 14, 14' and a load tray movably mounted to the base or runners.

The channel members 12 may be fixed to a rigid support surface in the vehicle. However, particularly for use on the floor of the luggage compartment, the channel members 12a, 12b could be formed integrally with or attached to a flexible mat 26 as discussed above. In this case, the weight of the luggage will be relied on to hold the mat 26 in position.

The retention system 10 in accordance with the embodiment described is particularly suited for use in retaining items in a luggage compartment of a vehicle.

Various changes and modifications may be made to the above described arrangements without departing from the scope of the present invention as defined in the claims.

## Claims

1. A vehicle luggage retention system (10) comprises at least one elongate channel member (12) and at least one clip (14, 14') for insertion into the channel member, the channel member defining an internal channel (22) and having a longitudinal slot (24) providing access to the channel, each clip having an engagement portion (28) adapted to locate in the channel and an external attachment portion (30) connected to the engagement portion by means of a neck (32) which passes through the longitudinal slot, the engagement portion (30) being shaped such that in one angular orientation it is able to pass through the longitudinal slot (24), so as to enable it to be inserted into or removed from the channel member (12), and such that once inserted it can be moved to another angular orientation in which it is unable to pass through the longitudinal slot (24) to prevent its removal from the channel member, **characterised in that** at least part of the clip which contacts the channel member (12) once inserted comprises a friction material (34) adapted so that contact between the material and the channel member resists longitudinal movement of the clip along the channel member; at least part (35) of the at least one clip (14, 14') being made of a load bearing material, such as a metallic or polymeric material, onto which the friction material (34) is over-moulded or coated or wherein the at least one clip (14, 14') has a load bearing core and the friction material (34) is in the form of separate pads or sleeves that are attached to the load bearing core.

2. A vehicle luggage retention system (10) as claimed in claim1, wherein the system comprises at least two of said channel members (12) arranged in spaced apart relation.

3. A vehicle luggage retention system (10) as claimed in claim 1 or claim 2, wherein the attachment portion (30) of the at least one clip is adapted to enable a retention member (42, 44) to be attached to it.

4. A vehicle luggage retention system (10) as claimed in any one of the preceding claims, in which the attachment portion (30) of the at least one clip comprises a buckle loop (31).

5. A vehicle luggage retention system (10) as claimed in any one of the preceding claims, wherein the system comprises at least one retention member (42, 44) to which at least one clip (14) is attached.

6. A vehicle luggage retention system (10) as claimed in any one of the preceding claims, wherein the friction material (34) is a resiliently deformable material.

7. A vehicle luggage retention system (10) as claimed in any one of the preceding claims, wherein, the friction material (34) is a natural or synthetic rubber or a polymeric material.

8. A vehicle luggage retention system (10) as claimed in any one of the preceding claims, wherein the at least one channel member (12) comprises a generally planar base region (16) and two curved side wall regions (18, 20) extending from the base towards each other to define the internal channel (22), the sidewalls having free ends that are spaced apart to define the longitudinal slot (24).

9. A vehicle luggage retention system (10) as claimed in any one of the preceding claims, wherein the at least one channel member (12) is adapted to be fixed to a support surface.

10. A vehicle luggage retention system (10) as claimed in any one of claims 1 to 8, wherein the at least one channel member (12) is affixed to or moulded integrally with a flexible mat (26).

11. A vehicle luggage retention system (10) as claimed in any one of the preceding claims, wherein part of the attachment portion (30) of each clip (14, 14') overlies in spaced relation a part of the engagement portion (28), at least opposing surfaces of the overlying parts of the attachment and engagement portions comprising the friction material (34).

12. A vehicle luggage retention system (10) as claimed in claim 11, in which the arrangement is configured such that when each clip (14, 14') is engaged in the channel (22) it can be rocked by the application of a lateral load to the attachment portion (30) to bring part of the engagement portion (28) which comprises the friction material (34) into contact with an inner surface of the channel member (12) and a part of the attachment portion (30) which comprises the friction material (34) into contact with an outer surface of the channel member (12).

13. A vehicle luggage retention system (10) as claimed in claim 11 or claim 12, in which the engagement portion (28) has locking regions which extend either side of the neck (32) in a common plane, the attachment portion (30) having corresponding locking regions extending in the same plane and which overly in spaced relation the locking regions of the engagement portion (28), at least opposed surfaces of the engagement portion locking regions and the attachment portion locking regions comprising the friction material 34.

14. A vehicle luggage retention system (10) as claimed in claim 8, or any one of claims 11 to 13 when dependent on claim 8, in which each side wall (18, 20) of the channel member is received between opposing surfaces of the engagement and attachment portions (28, 30) of the or each clip (14, 14') when it is engaged in the channel member (12), the opposing surfaces comprising the friction material (34).

## Patentansprüche

1. Ein Fahrzeuggepäckrückhaltesystem (10) umfasst wenigstens ein längliches Kanalelement (12) und wenigstens einen Clip (14, 14') zum Einsetzen in das Kanalelement, wobei das Kanalelement einen inneren Kanal (22) definiert und einen Längsschlitz (24) aufweist, der Zugang zu dem Kanal verschafft, wobei jeder Clip einen Eingriffsabschnitt (28) aufweist, der dazu ausgestaltet ist, in dem Kanal angeordnet zu werden, und einen externen Befestigungsabschnitt (30), der mit dem Eingriffsabschnitt über einen Hals (32) verbunden ist, welcher durch den Längsschlitz hindurchtritt, wobei der Eintrittsabschnitt (30) derart geformt ist, dass er in einer Winkelorientierung in der Lage ist, durch den Längsschlitz (24) hindurchzutreten, so dass er in das Kanalelement (12) eingesetzt oder von diesem entfernt werden kann, und derart, dass er nach dem Einsetzen zu einer anderen Winkelorientierung bewegt werden kann, in welcher er nicht mehr durch den Längsschlitz (24) hindurchtreten kann, um seine Entfernung aus dem Kanalelement zu verhindern, **dadurch gekennzeichnet, dass** wenigstens ein Teil des Clips, welcher nach dem Einsetzen das Kanalelement (12) berührt, ein Reibmaterial (34) aufweist, das derart angepasst ist, dass der Kontakt zwischen dem Material und dem Kanalelement einer Längsbewegung des Clips entlang des Kanalelements widersteht; wobei wenigstens ein Teil (35) des wenigstens einen Clips (14, 14') aus einem lastaufnehmendem Material, wie einem metallischen oder Polymermaterial, hergestellt ist, auf welches das Reibmaterial (34) aufgeformt oder beschichtet ist, oder wobei der wenigstens eine Clip (14, 14') einen lastaufnehmenden Kern aufweist und das Reibmaterial (34) in Form separater Polster oder Hülsen vorliegt, die an dem lastaufnehmenden Kern angebracht sind.

2. Ein Fahrzeuggepäckrückhaltesystem (10) nach Anspruch 1, wobei das System wenigstens zwei der Kanalelemente (12) aufweist, die voneinander beabstandet sind.

3. Ein Fahrzeuggepäckrückhaltesystem (10) nach Anspruch 1 oder Anspruch 2, wobei der Befestigungsabschnitt (30) des wenigstens einen Clips dazu ausgestaltet ist, die Befestigung eines Halteelements (42, 44) an ihm zu ermöglichen.

4. Ein Fahrzeuggepäckrückhaltesystem (10) nach einem der vorhergehenden Ansprüche, bei dem der Befestigungsabschnitt (30) des wenigstens einen Clips einen Schnallenring (31) aufweist.

5. Ein Fahrzeuggepäckrückhaltesystem (10) nach einem der vorhergehenden Ansprüche, wobei das System wenigstens ein Rückhalteelement (42, 44) aufweist, an welchem wenigstens ein Clip (14) angebracht ist.

6. Ein Fahrzeuggepäckrückhaltesystem (10) nach einem der vorhergehenden Ansprüche, wobei das Reibmaterial (34) ein elastisch deformierbares Material ist.

7. Ein Fahrzeuggepäckrückhaltesystem (10) nach einem der vorhergehenden Ansprüche, wobei das Reibmaterial (34) ein natürlicher oder synthetischer Gummi oder ein Polymermaterial ist.

8. Ein Fahrzeuggepäckrückhaltesystem (10) nach einem der vorhergehenden Ansprüche, wobei das wenigstens eine Kanalelement (12) einen im Wesentlichen ebenen Basisbereich (16) und zwei gekrümmte Seitenwandbereiche (18, 20) aufweist, welche sich von der Basis zueinander erstrecken, um den inneren Kanal (22) zu definieren, wobei die Seitenwände freie Enden aufweisen, die voneinander beabstandet sind, um den Längsschlitz (24) zu definieren.

9. Ein Fahrzeuggepäckrückhaltesystem (10) nach einem der vorhergehenden Ansprüche, wobei das wenigstens eine Kanalelement (12) dazu ausgestaltet ist, an einer Tragfläche befestigt zu werden.

10. Ein Fahrzeuggepäckrückhaltesystem (10) nach einem der Ansprüche 1 bis 8, wobei das wenigstens eine Kanalelement (12) an einer flexiblen Matte (26) befestigt oder einstückig mit dieser geformt ist.

11. Ein Fahrzeuggepäckrückhaltesystem (10) nach einem der vorhergehenden Ansprüche, wobei ein Teil des Befestigungsabschnitts (30) jedes Clips (14, 14') einen Teil des Eingriffsabschnitts (28) mit Abstand überlappt, wobei wenigstens gegenüberliegende Oberflächen der überlappenden Teile der Befestigungs- und Eingriffsabschnitte das Reibmaterial (34) aufweisen.

12. Ein Fahrzeuggepäckrückhaltesystem (10) nach Anspruch 11, bei welchem die Anordnung derart gestaltet ist, dass dann, wenn alle Clips (14, 14') in den Kanal (22) eingreifen, es durch Aufbringen einer seitlichen Last auf den Befestigungsabschnitt (30) geschüttelt werden kann, um einen Teil des Angriffsabschnitts (28), der das Reibmaterial (34) umfasst, in Kontakt mit einer Innenfläche des Kanalelements (12) zu bringen, und um einen Teil des Befestigungsabschnitts (30), der das Reibmaterial (34) umfasst, in Kontakt mit einer Außenfläche des Kanalelements (12) zu bringen.

13. Ein Fahrzeuggepäckrückhaltesystem (10) nach Anspruch 11 oder Anspruch 12, bei dem der Eingriffsabschnitt (28) Verriegelungsbereiche aufweist, die sich auf beiden Seiten des Halses (32) in einer gemeinsamen Ebene erstrecken, wobei der Befestigungsabschnitt (30) korrespondierende Verriegelungsbereiche aufweist, die sich in der gleichen Ebene erstrecken und die Verriegelungsbereiche des Eingriffsabschnitts (28) mit Abstand überlappen, wobei wenigstens gegenüberliegende Oberflächen der Eingriffsabschnittsverriegelungsbereiche und der Befestigungsabschnittsverriegelungsbereiche das Reibmaterial (34) aufweisen.

14. Ein Fahrzeuggepäckrückhaltesystem (10) nach Anspruch 8 oder einem der Ansprüche 11 bis 13, wenn diese von Anspruch 8 abhängen, bei dem jede Seitenwand (18, 20) des Kanalelements zwischen gegenüberliegenden Flächen der Eingriffs- und Befestigungsabschnitte (28, 30) des oder jeden Clips (14, 14') aufgenommen wird, wenn er in das Kanalelement (12) eingreift, wobei die gegenüberliegenden Oberflächen das Reibmaterial (34) aufweisen.

## Revendications

1. Système de retenue de bagages (10) pour véhicule comprend au moins un élément formant canal allongé (12) et au moins une attache (14, 14') à insérer dans l'élément formant canal, l'élément formant canal définissant un canal interne (22) et ayant une fente longitudinale (24) permettant d'accéder au canal, chaque attache ayant une partie d'engagement (28) adaptée pour être placée dans le canal et une partie de fixation externe (30) reliée à la partie d'engagement au moyen d'un col (32) qui passe à travers la fente longitudinale, la partie d'engagement (30) étant mise en forme de sorte que, dans une orientation angulaire, elle puisse passer à travers la fente longitudinale (24), de façon à lui permettre d'être insérée dans l'élément formant canal (12) ou retirée de celui-ci, et de sorte que, une fois insérée, elle puisse être déplacée vers une autre orientation angulaire dans laquelle elle ne peut plus passer à travers la fente longitudinale (24) pour empêcher son retrait de l'élément formant canal, **caractérisé en ce qu'**au moins une partie de l'attache qui entre en contact avec l'élément formant canal (12) une fois qu'elle est insérée comprend un matériau de friction (34) adaptée de sorte que le contact entre le matériau et l'élément formant canal résiste à un mouvement longitudinal de l'attache le long de l'élément formant canal ; au moins une partie (35) de l'au moins une attache (14, 14') étant constituée d'un matériau porteur, tel qu'un matériau métallique ou polymère, sur lequel le matériau de friction (34) est surmoulé ou déposé ou dans lequel l'au moins une attache (14, 14') comporte une partie centrale porteuse et le matériau de friction (34) est sous la forme de manchons ou de patins séparés qui sont fixés à la partie centrale porteuse.

2. Système de retenue de bagages (10) pour véhicule tel que revendiqué dans la revendication 1, dans lequel le système comprend au moins deux desdits éléments formant canal (12) agencés en étant espacés les uns des autres.

3. Système de retenue de bagages (10) pour véhicule tel que revendiqué dans la revendication 1 ou 2, dans lequel la partie de fixation (30) de l'au moins une attache est adaptée pour permettre d'y fixer un élément de retenue (42, 44).

4. Système de retenue de bagages (10) pour véhicule tel que revendiqué dans l'une quelconque des revendications précédentes, dans lequel la partie de fixation (30) de l'au moins une attache comprend une boucle de ceinture (31).

5. Système de retenue de bagages (10) pour véhicule tel que revendiqué dans l'une quelconque des revendications précédentes, dans lequel le système comprend au moins un élément de retenue (42, 44) auquel au moins une attache (14) est fixée.

6. Système de retenue de bagages (10) pour véhicule tel que revendiqué dans l'une quelconque des revendications précédentes, dans lequel le matériau de friction (34) est un matériau élastiquement déformable.

7. Système de retenue de bagages (10) pour véhicule tel que revendiqué dans l'une quelconque des revendications précédentes, dans lequel, le matériau de friction (34) est un caoutchouc naturel ou synthétique ou un matériau polymère.

8. Système de retenue de bagages (10) pour véhicule tel que revendiqué dans l'une quelconque des revendications précédentes, dans lequel l'au moins un élément formant canal (12) comprend une région de base globalement planaire (16) et deux régions de parois latérales incurvées (18, 20) s'étendant depuis la base l'une vers l'autre pour définir le canal interne (22), les parois latérales ayant des extrémités libres qui sont espacées les unes des autres pour définir la fente longitudinale (24).

9. Système de retenue de bagages (10) pour véhicule tel que revendiqué dans l'une quelconque des revendications précédentes, dans lequel l'au moins un élément formant canal (12) est adapté pour être fixé à une surface de support.

10. Système de retenue de bagages (10) pour véhicule tel que revendiqué dans l'une quelconque des revendications 1 à 8, dans lequel l'au moins un élément formant canal (12) est fixé à un tapis flexible (26) ou moulé d'un seul tenant avec celui-ci.

11. Système de retenue de bagages (10) pour véhicule tel que revendiqué dans l'une quelconque des revendications précédentes, dans lequel une partie de la partie de fixation (30) de chaque attache (14, 14') recouvre dans une relation espacée une partie de la partie d'engagement (28),
au moins des surfaces opposées des parties de recouvrement des parties de fixation et d'engagement comprenant le matériau de friction (34).

12. Système de retenue de bagages (10) pour véhicule tel que revendiqué dans la revendication 11, dans lequel l'agencement est configuré de sorte que lorsque chaque attache (14, 14') est engagée dans le canal (22) elle peut être basculée par l'application d'une charge latérale à la partie de fixation (30) afin d'amener une partie de la partie d'engagement (28) qui comprend le matériau de friction (34) en contact avec une surface interne de l'élément formant canal (12) et une partie de la partie de fixation (30) qui comprend le matériau de friction (34) en contact avec une surface externe de l'élément formant canal (12).

13. Système de retenue de bagages (10) pour véhicule tel que revendiqué dans la revendication 11 ou 12, dans lequel la partie d'engagement (28) comporte des régions de verrouillage qui s'étendent de chaque côté du col (32) dans un plan commun, la partie de fixation (30) comportant des régions de verrouillage correspondantes s'étendant dans le même plan et qui recouvrent dans une relation espacée les régions de verrouillage de la partie d'engagement (28), au moins des surfaces opposées des régions de verrouillage de la partie d'engagement et des régions de verrouillage de la partie de fixation comprenant le matériau de friction (34).

14. Système de retenue de bagages (10) pour véhicule tel que revendiqué dans la revendication 8, ou l'une quelconque des revendications 11 à 13 lorsqu'elle dépend de la revendication 8, dans lequel chaque paroi latérale (18, 20) de l'élément formant canal est reçue entre des surfaces opposées des parties d'engagement et de fixation (28, 30) de l'attache ou de chaque attache (14, 14') lorsqu'elle est engagée dans l'élément formant canal (12), les surfaces opposées comprenant le matériau de friction (34).
